Europäisches Patentamt

European Patent Office

Office européen des brevets

(11) Publication number: **0 102 426**
**B1**

(12) **EUROPEAN PATENT SPECIFICATION**

(45) Date of publication of patent specification: **26.11.86**

(21) Application number: **82304646.1**

(22) Date of filing: **03.09.82**

(51) Int. Cl.⁴: **B 23 K 1/00**

(54) Solder removing device.

(43) Date of publication of application:
**14.03.84 Bulletin 84/11**

(45) Publication of the grant of the patent:
**26.11.86 Bulletin 86/48**

(84) Designated Contracting States:
**CH DE FR IT LI SE**

(56) References cited:
**GB-A- 875 398**
**US-A-3 627 191**
**US-A-4 081 575**
**US-A-4 164 606**

(73) Proprietor: **Spirig, Ernst**
**P.O.Box 160 Speerstrasse 14**
**CH-8640 Rapperswil (CH)**

(72) Inventor: **Spirig, Ernst**
**P.O.Box 160 Speerstrasse 14**
**CH-8640 Rapperswil (CH)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

EP 0 102 426 B1

## Description

This invention relates to a solder removing device for use in absorbing, by capillary attraction, solder which has been made molten by heating when it is desired to break a soldered connection, for example in an electronic circuit.

Solder removing wicks in elongate form are known—see for example U.S. Patent 3 627 191 and my U.S. Patents 4 081 575 and 4 164 606. Such wicks comprise fine copper wires (possibly alloy-coated) braided together into an elongate tubular structure (subsequently flattened) and coated with a solder flux (for example rosin) to improve the capability of the wires to be wetted by the molten solder. In use, an end of the braided wick is applied to the solder which has been made molten, and this solder is absorbed by capillary attraction into the interstices between the wires.

The interstices between adjacent wire strands are in fact found to be relatively small: the main interstice is the volume within the tubular (but flattened) structure, but the molten solder can usually only reach this volume by passing between the adjacent strands of the braid and the flow of solder is therefore slow. Indeed, it is a practice, when carrying out a solder-removing operation, to destroy the integrity of the braid at the end of the wick by "mopping" it with the soldering iron tip over a projecting wire end at the solder-removing site, so as to fan out the wires at the end of the wick and thus create enlarged interstices.

In accordance with this invention, there is provided a solder removing device comprising at least one strand and formed by weaving, stranding, braiding, knitting or crochetting, to have an open-mesh structure in which adjacent sections of the at least one strand are not touching or contiguous along their lengths, at least the surface of the strand being metallic and receptive to solder flux and indeed being coated with solder flux rendering it more capable of wetting with molten solder.

Relatively large-size interstices for solder-absorbing are available because adjacent sections of the strand or strands are not touching or contiguous.

A preferred structure comprises an elongate, flattened tubular structure formed by knitting. Thus, a single strand is formed into an elongate tubular structure by a continuously operating knitting machine, the structure being subsequently flattened (either between rollers or simply being wound onto a reel).

The open-mesh structure exhibits the advantage of relatively large-size interstices to receive the molten solder. More solder is absorbed by the same quantity of copper wire, with consequent improved efficiency and economy. The knitting process enables at least an equivalent length of wick to be manufactured in a given time period, and enables a much higher width of wick to be formed. The wick may also be formed as a pad instead of as an elongate structure, in which case it may be applied face-to-face with a circuit board to remove molten solder from an entire area of the circuit board.

The open-mesh structure exhibits further advantages also. Copper wires stranded together must normally be cleaned of oxide layers or other contaminants which would interfere with the receiving of solder flux or with the wetting by molten solder. Cleaning may be effected by applying heat whilst the wick is in a vacuum or in a reducing gas or an inert gas. However, the prior braided structures, with adjacent strands contiguous, do not readily permit the passage of gas from or to the interior of the tubular structure, so that its inner surface will not be so clean as the outer surface, yet the inner surface is important as a wetting surface. Chemical cleaning may alternatively be used, but again the contiguous strands in the prior braided structures inhibit the passage of cleaning fluid to and from the braid interior: cleaning chemical trapped on the interior of the braid would require considerable rinsing to remove it otherwise it would prove a serious contaminant. By contrast, the open-structure in accordance with this invention readily facilitates cleaning either by applying heat (for example passing an electrical current through the wick until it glows) in a vacuum or in an inert or reducing gas, or by using a chemical cleaner with subsequent rinsing. Less energy is required for the electrical resistance heating method, because of the lower weight of copper.

Also, prior braided wicks are normally coated with flux by dipping into a solution containing rosin, with subsequent evaporation and drying. The solution must penetrate to the inner surface of the wick, but with the prior braided wick the penetration is slow and may not be complete. The open-mesh structure provides ready access for the solution to all surfaces of the strands, and for the subsequent drying by application of hot air or by subjecting the wick to a vacuum.

Moreover, the possibility also arises of coating the strands with copper (or alloy as in my U.S. Patent 4 164 606) once the open-mesh structure has been formed, thus providing a clean copper coating on all surfaces of the strands. For example, the structure may be formed of copper wires which are then coated with copper by chemical deposition, or the structure may be formed of low-cost metal wires (or indeed of non-metallic filaments) which are then coated with copper, with subsequent application of flux.

It will also be appreciated tht the open-mesh structures in accordance with this invention will require a solder iron of lesser wattage of heat up than the prior braided wick, because of its lesser copper content per unit length.

An embodiment of this invention will now be described, by way of example only, with reference to the accompanying drawings, in which:

Figure 1 is a detailed elevational view of one[1] end of a prior art braided wick; and

Figure 2 is a detailed elevational view of a knitted wick according to the present invention.

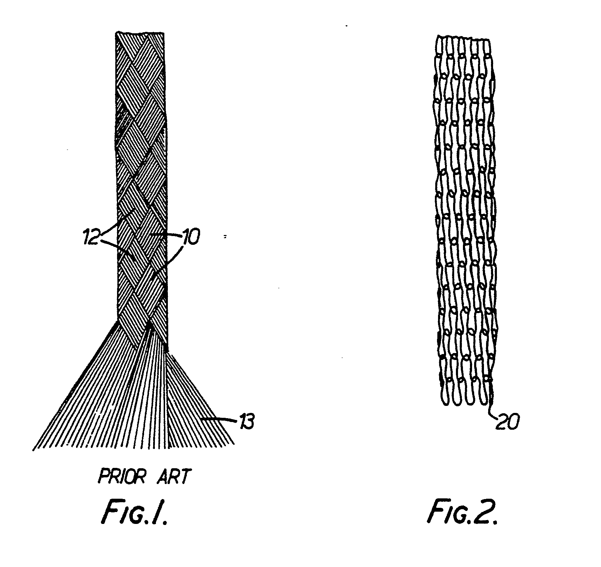

Referring first to Figure 1, the prior braided wick comprises groups 10, 12 of parallel contiguous copper wires braided together into tubular structure, which is then flattened. The end 13 of the wick is shown with the wires fanned out (as mentioned above) to improve the sizes of the interstices ready for a solder-removing exercise.

Referring now to Figure 2, a knitted wick according to the present invention comprises a strand 20 of copper formed by a continuous helically-forming knitting machine into a tubular open-mesh structure, and subsequently flattened. Although this wick is shown formed with a strand into loops by knitting, it might instead be formed by crochetting or alternatively an open-mesh structure might be formed by weaving or indeed by braiding, providing the adjacent strands will not be contiguous and will instead provide open spaces for absorbing the molten solder. After cleaning, the strand 20 is coated with flux to complete the wick. As mentioned above, the copper strand may be coated (with copper or with tin or an alloy of lower melting point such as a tin-lead alloy) prior to flux coating, and indeed the strand may comprise a low-cost metal or even a non-metallic filament which is subsequently coated with one of the above metals prior to flux coating. Instead of the elongate form shown, the wick may be formed in a pad-shape.

In the knitted construction such as shown in Figure 2, the diameter of the strand may be in the range 0.1 mm to 0.25 mm. With a diameter smaller than 0.1 mm, the knitting process may be too slow and risk strand breaks, whilst above 0.25 mm the mechanical wear on the knitting machine may be too great. The range of diameters may however vary depending on the type of knitting machine, the knitting machine in any event produces a tubular construction of a diameter, for example, approximately in the range 2 mm to 25 mm or more, which tube is then flattened between rollers. The stitch or mesh size is determined by the selected diameter and by the number of needles of the machine disposed around the circumference, thus 2, 3, 4, 6, 8 of 12 or more needles may be incorporated and this will be the number of stitches per circumference. The greater the number of needles for a given diameter, the greater the number of stitches per unit length and the smaller the mesh size. In the example shown in Figure 2, the strand is a copper strand of 0.1 mm diameter and the production rate was 130 meters per hour.

The knitting can be carried out with all types of yarn, whether from cotton, wool, silk, nylon, acrylic, plastics or metal. If metal, it should be easy to bend such as copper. Knitting with metal is virtually identical to knitting of textile or like yarns, with appropriate selection of operating parameters because the metal is likely to lead to much higher wear on the machine. With non-metallic yarns the knitted wick will of course require subsequent metallisation.

**Claims**

1. A solder removing device comprising at least one strand at least the surface of which is metallic and receptive to solder flux and indeed being coated with solder flux rendering it more capable of wetting with molten solder, the at least one strand (20) being formed by knitting, weaving, stranding, braiding or crochetting to have an open-mesh structure in which adjacent sections of the at least one strand are not touching or contiguous along their lengths.

2. A solder removing device as claimed in claim 1, having an elongate, flatted tubular structure.

3. A solder removing device as claimed in claim 1, having a pad-shaped structure.

4. A solder removing device as claimed in any preceding claim, wherein the strand (20) is copper-coated after being formed into said open-mesh structure and prior to receiving said flux.

5. A solder removing device as claimed in claim 4, wherein the strand (20) comprises a non metallic filament.

6. A solder removing device as claimed in claim 1, 2 or 3, wherein the strand (20) is alloy coated after being formed into said open-mesh structure and prior to receiving said flux.

**Patentansprüche**

1. Entlötvorrichtung, enthaltend wenigstens einen Strang, von dem wenigstens die Oberfläche metallisch und für Lötflußmittel aufnahmefähig ist und tatsächlich mit Lötflußmittel beschichtet ist, das ihn für die Benetzung mit geschmolzenem Lot geeigneter macht, wobei der wenigstens eine Strang (20) durch Stricken, Weben, Verseilen, Klöppeln oder Häkeln gebildet ist, um einen offenmaschigen Aufbau aufzuweisen, in welchem benachbarte Abschnitte des wenigstens einen Strangs längs ihrer Längen sich nicht berühren oder aneinanderstoßen.

2. Entlötvorrichtung nach Anspruch 1, die einen langgestreckten, abgeflachten tubusförmigen Aufbau aufweist.

3. Entlötvorrichtung nach Anspruch 1, die einen kissenartigen Aufbau aufweist.

4. Entlötvorrichtung nach einem der vorhergehenden Ansprüche, bei der der Strang (20) nach dem Formen in den offenmaschigen Aufbau und vor dem Empfang des Flußmittels kupferbeschichtet ist.

5. Entlötvorrichtung nach Anspruch 4, bei der der Strang (20) ein nicht-metallisches Filament enthält.

6. Entlötvorrichtung nach Anspruch 1, 2 oder 3, bei der der Strang (20) nach dem Formen in den offenmaschigen Aufbau und vor dem Empfang des Flußmittels mit einer Legierung beschichtet ist.

**Revendications**

1. Dispositif pour enlever de la brasure, constitué d'au moins un élément filiforme dont au moins la surface est métallique et réceptive au flux décapant de brasage, cette surface étant effectivement enduite de flux pour la rendre plus apte à être mouillée par la brasure fondue, l'élément filiforme ou chaque élément filiforme étant transformé par tricotage, tissage, câblage, tressage ou crochetage en une structure à mailles ouvertes, dans laquelle des sections voisines de l'élément filiforme ou de plusieurs éléments filiformes ne se touchent pas ou ne sont pas contiguës longitudinalement.

2. Dispositif selon la revendication 1, ayant une structure tubulaire de forme allongée et aplatie.

3. Dispositif selon la revendication 1, ayant une structure en forme de tampon.

4. Dispositif selon l'une quelconque des revendications précédentes, dans lequel l'élément filiforme (20) est revêtu de cuivre après avoit été transformé en structure à mailles ouvertes et avant de recevoir le flux.

5. Dispositif selon la revendication 4, dans lequel l'élément filiforme (20) comporte un filament non métallique.

6. Dispositif selon la revendication 1, 2 ou 3, dans lequel l'élément filiforme (20) est revêtu d'un alliage après avoir été transformé en une structure à mailles ouvertes et avant de recevoir le flux.

12 10

13

PRIOR ART
FIG.1.

20

FIG.2.